(19) Europäisches Patentamt
European Patent Office
Office européen des brevets

(11) EP 2 096 734 A1

(12) EUROPEAN PATENT APPLICATION
published in accordance with Art. 153(4) EPC

(43) Date of publication:
02.09.2009 Bulletin 2009/36

(51) Int Cl.:
H02J 7/34 (2006.01)      B66B 1/34 (2006.01)
B66B 5/02 (2006.01)      H01M 10/44 (2006.01)
H02J 9/00 (2006.01)      H02J 9/06 (2006.01)

(21) Application number: 07850426.3

(22) Date of filing: 11.12.2007

(86) International application number:
PCT/JP2007/073864

(87) International publication number:
WO 2008/075586 (26.06.2008 Gazette 2008/26)

(84) Designated Contracting States:
AT BE BG CH CY CZ DE DK EE ES FI FR GB GR
HU IE IS IT LI LT LU LV MC MT NL PL PT RO SE
SI SK TR

(30) Priority: 19.12.2006 JP 2006341195

(71) Applicant: Panasonic Corporation
Kadoma-shi
Osaka 571-8501 (JP)

(72) Inventors:
• IIDA, Takuma
Osaka-shi, Osaka 540-6207 (JP)
• KIMURA, Tadao
Osaka-shi, Osaka 540-6207 (JP)

(74) Representative: Schwabe - Sandmair - Marx
Patentanwälte
Stuntzstrasse 16
81677 München (DE)

(54) POWER SUPPLY SYSTEM, POWER SUPPLY CONTROL METHOD OF POWER SUPPLY SYSTEM, POWER SUPPLY CONTROL PROGRAM OF POWER SUPPLY SYSTEM, AND COMPUTER READABLE RECORDING MEDIUM HAVING POWER SUPPLY CONTROL PROGRAM OF POWER SUPPLY SYSTEM RECORDED THEREON

(57)    A power source system capable of temporarily increasing the power supply capacity of a power accumulator when an interruptible power source is stopped. Upon receiving stop information of the interruptible power source from an integrated control ECU, a controller reduces an operable voltage that is determined as an output voltage for ending discharge of the power accumulator, outputs the reduced operable voltage from a communication part to the integrated control ECU. The integrated control ECU controls a charge/discharge control device based on the reduced operable voltage, and increases the power supply capacity of the power accumulator.

FIG. 1

**Description**

Technical Field

The present invention relates to a power source system having a power accumulator for supplying power when a commercial power source or other interruptible power source breaks down, a power supply control method of the power source system, a power supply control program of the power source system, and a computer readable recording medium having the power supply control program of the power source system recorded thereon.

Background Art

In recent years, a power accumulator has drawn wide attention and been used as a backup power source. A backup power source is charged when a commercial power source is operated normally, and continues to supply power to equipment in place of the commercial power source when the commercial power source has a defect. Examples of such a backup power source include a UPS (Uninterruptible Power Supply). By instantaneously switching the commercial power source to an output of the backup power source in the case of power outage, a computer or a storage unit in use, as well as network equipment such as a server are prevented from being stopped.

Such a backup power source combined with the power accumulator is controlled to maintain the residual capacity representing the state of charge (to be referred to as "SOC" hereinafter) at a high level. In this system, generally because surplus power is charged in the power accumulator efficiently by a power generation action of an electric motor, charge/discharge control is performed so that the SOC does not exceed 100%. In order to supply power to the electric motor when necessary, the charge/discharge control is performed so that the SOC does not decrease to 0 (zero). Specifically, normally in the power accumulator, the control is performed so that the SOC fluctuates within a range of 20 to 80%.

With regard to elevators, on the other hand, a hybrid elevator that has a cage and a counterweight to inhibit unnecessary power consumption during the operation of the hybrid elevator has been developed. Such a hybrid elevator utilizes the power of its battery at the time of power outage, so that, in the case of power outage or other abnormal state during the operation of the hybrid elevator, the power for driving the elevator is supplied from a power source to carry the elevator to the nearest floor or any floor and safely retrieve the passages from the cage.

The following method is proposed as a method for controlling an automatic landing device of an elevator. Patent Document 1, for example, discloses a method for detecting the output voltage, output current, and temperature of a battery power source to perform a rescue operation in response to the power supply capability of the battery power source.

Here, as a method for calculating the power supply capability, a method for calculating the power supply capability from the open voltage, internal resistance, and minimum voltage (operable voltage) of the battery power source is generally known, as shown in Equation (1) below. The minimum voltage used for calculating the power supply capacity is set with a certain degree of margin, in view of the life of the battery power source.

$$\text{Power Supply Capacity} = \text{Minimum Voltage} \times (\text{Open Voltage} - \text{Minimum Voltage})/\text{Internal Resistance} \quad \ldots (1)$$

Moreover, the hybrid elevator has to always secure an energy amount for carrying the elevator to a necessary floor in case of emergency during the normal operation of the commercial power source, and therefore a large power accumulator with a large capacity is required.

In the method disclosed in Patent Document 1, the output voltage and the voltage set value are compared with each other by a discharge time and the discharge state of the battery is detected by the magnitude relation therebetween to control the operation of the elevator. Therefore, when the power supply capacity of the battery power source is low, the power supply capacity will be lost, thereby stopping the power supply from the battery. In this case, because charging of the battery power source is started after the interruptible power source returns, and the rescue operation is conducted upon completion of the charging, the elevator cannot be carried to the nearest floor to perform the rescue operation in the case of an abnormal situation of the interruptible power source. As a result, the passengers remain trapped in the elevator.

Moreover, when the interruptible power source is stopped due to a disaster or the like as in the hybrid elevator, it is necessary for the backup power source to ensure the minimum power supply capacity for enabling the minimum operation. Consequently, because a margin becomes necessary in the capacity of the backup power source, a large power accumulator is necessary.

In addition, the minimum voltage used for calculating the power supply capacity has a margin, in view of the life property. Therefore, the value of the actual power supply capacity is smaller than that of the primary power supply capacity of the power accumulator.

Patent Document 1: Japanese Unexamined Patent Application No. H11-199152

Disclosure of the Invention

An object of the present invention is to provide a power source system capable of realizing at least the minimum backup function, increasing the life duration of a power accumulator, and reducing the size of the power accumulator by temporarily improving the power supply capacity of the power accumulator when an interruptible power source is stopped by a disaster or the like. The present invention also provides a power supply control method of the power source system, a power supply control program of the power source system, and a computer readable recording medium having the power supply control program of the power source system recorded thereon.

A power source system according to an aspect of the present invention has: a power unit for supplying power to a load device; a power accumulator for supplying the power to the load device in place of the power unit when the power unit is stopped; and a controller for controlling the power supply from the power accumulator to the load device, wherein the controller sets an operable voltage, which is determined as an output voltage for ending discharge of the power accumulator, at a first voltage when the power unit is operated, and sets the operable voltage at a second voltage lower than the first voltage when the power unit is stopped, thereby increasing the power supplied to the load device by the power accumulator.

According to the power source system described above, the power supply capacity of the power accumulator can be improved by reducing the operable voltage of the power accumulator when the power unit is stopped, the operable voltage being set during the normal operation of the power unit. Furthermore, because the operable voltage of the power accumulator is reduced after the power unit is stopped, and the number of times that the power accumulator is overdischarged due to the decrease in the operable voltage can be prevented from increasing, the life duration of the power accumulator can be increased. In addition, the size of the power accumulator can be reduced because it is not necessary to increase the capacity of the power accumulator beforehand in light of an increase in power supply when the power unit is stopped.

Brief Description of the Drawings

[Fig. 1] Fig. 1 is a block diagram showing a configuration of a power source system according to Embodiment 1 of the present invention;

[Fig. 2] Fig. 2 is a block diagram showing a configuration of a controller according to Embodiment 1 of the present invention;

[Fig. 3] Fig. 3 is a flowchart showing a processing procedure for power supply control according to Embodiment 1 of the present invention;

[Fig. 4] Fig. 4 is a block diagram showing a configuration of a controller according to Embodiment 2 of the present invention; and

[Fig. 5] Fig. 5 is a flowchart showing a processing procedure for power supply control according to Embodiment 2 of the present invention.

Best Mode for Carrying Out the Invention

Embodiments of the present invention are described hereinafter with reference to the drawings.

(Embodiment 1)

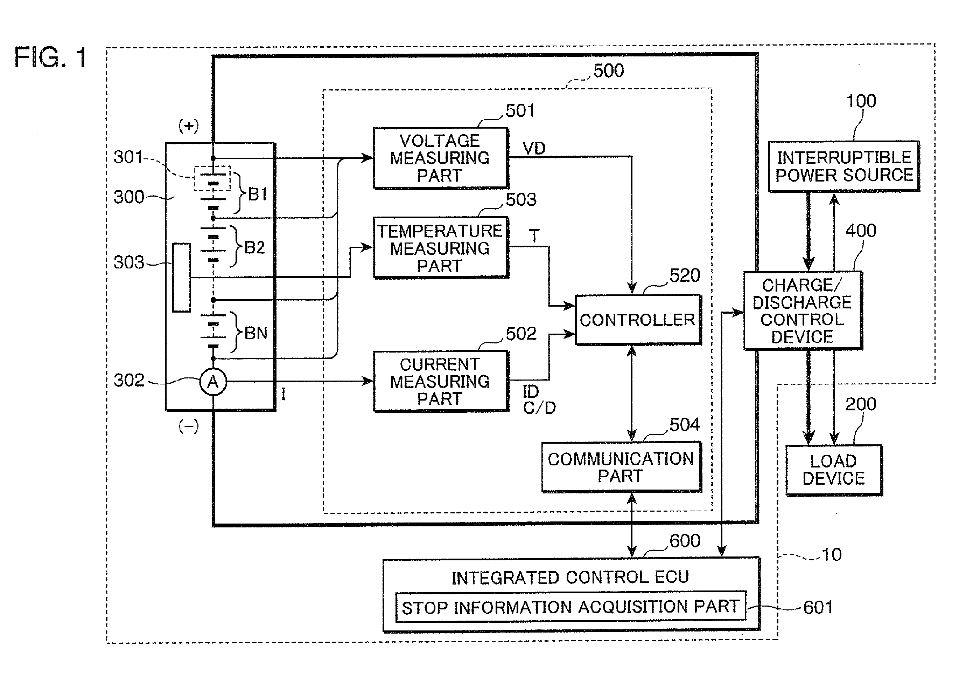

Fig. 1 is a block diagram showing a configuration of a power source system according to Embodiment 1 of the present invention. As shown in Fig. 1, a power source system 10 according to the present invention has an interruptible power source 100, a power accumulator 300, a charge/discharge control device 400, a power supply control device 500, and an electronic control unit 600.

The interruptible power source 100 is, for example, a commercial power source, such as a generator having an engine as a source of power. A load device 200 has various loads driven by a supply of power.

The power accumulator 300 stores surplus power from the interruptive power source 100 and regenerative electric power generated by the load device 200, and supplies the stored electric power to the load device 200 according to need. The power accumulator 300 is configured by connecting N number of electric power accumulation element blocks B1, B2, ..., BN in series. Each of the electric power accumulation element blocks B1, B2, ..., BN is configured by electrically connecting a plurality of electrical storage elements 301 in series. An alkaline storage battery such as a nickel hydride battery, an organic battery such as a lithium-ion battery, and an electrical double layer capacitor can be used as each of the electrical storage elements 301. Note that the number N of the electric power accumulation element blocks and the number of the electrical storage elements 301 are not particularly limited

The power accumulator 300 has a predetermined range of operating voltage determined beforehand, so that the battery characteristics, life duration and reliability of the power accumulator 300 are not degraded. Operable voltage, which is the minimum voltage (final voltage) of this operating voltage range is the voltage for ending discharge of the power accumulator 300. During the normal operation, when the output voltage of the power accumulator 300 falls below the operable voltage, discharge of the power accumulator 300, namely, power supply from the power accumulator 300, is stopped. However, power supply from the power accumulator 300 is possible until the output voltage of the power accumulator 300 falls below the operable voltage, namely, by reducing the operable voltage. In this case, the power accumulator 300 is overdischarged temporarily, but the battery characteristics and the like of the power accumulator 300 are not impinged so long as the discharge of the power accumulator 300 is executed without degrading the battery characteristics, life duration and reliability of the power accumulator 300.

The charge/discharge control device 400 controls charge/discharge of the power accumulator 300. The charge/discharge control device 400 is connected to the interruptible power source 100, load device 200 and power accumulator 300, and controls the charge from the interruptible power source 100 to the power accumulator 300 and the discharge from the power accumulator 300 to the load device 200. When consumption current of the load device 200 increases drastically or the electric power required by the load device 200 exceeds a predetermined value, the charge/discharge control device 400 discharges the insufficient electric power from the power accumulator 300 to the load device 200.

The charge/discharge control device 400 performs the charge/discharge control such that the SOC of the power accumulator 300 normally falls within an approximate range of 20 to 80%. However, a load leveling power source or a plug-in hybrid vehicle that effectively utilizes night power is charged when the SOC is 100%, and is discharged when the load device thereof requires energy.

The power supply control device 500 controls power supply from the power accumulator 300 to the load device 200 when the interruptible power source 100 is stopped.

The total control ECU 600 is connected to the charge/discharge control device 400 and the power supply control device 500 to control the entire power source system 10.

Next, the power supply control device 500 of the power source system 10 according to Embodiment 1 of the present invention is described. In Fig. 1, the power supply control device 500 has a voltage measuring part 501, a current measuring part 502, a temperature measuring part 503, a communication part 504, and a controller 520.

The voltage measuring part 501 measure a voltage value of the power accumulator 300. Specifically, the voltage measuring part 501 measures, in time-series, inter-terminal voltages V0, V1, V2, ..., VN-1, VN of the respective N number of electric power accumulation element blocks B1, B2, ..., BN in a predetermined cycle. The measured inter-terminal voltage of each electric power accumulation element is converted from an analogue signal to a digital signal, and outputs the inter-terminal voltage of each block and the total value of the inter-terminal voltages as voltage data VD of the power accumulator 300. The data output from the voltage measuring part 501 to the controller 520 is performed in a predetermined cycle. A flying capacitor system, for example, is known as a method for measuring the inter-terminal voltage of each electric power accumulation element block in time-series.

The current measuring part 502 measures a current value of the power accumulator 300. Specifically, the current measuring part 502 uses a current sensor 302 to measure charge/discharge current I of the power accumulator 300 in a predetermined cycle. The measured charge/discharge current is converted from an analogue signal to a digital signal and is output as current data ID along with a code C (charge)/D (discharge) representing a charge direction (+) and a discharge direction (-). The data output from the current measuring part 502 to the controller 520 is also performed in a predetermined cycle, as with the data output from the voltage measuring part 501. Here, the current sensor 302 is configured by a resistance element, current transformer, and the like.

The temperature measuring part 503 measure the temperature of the power accumulator 300. Specifically, the temperature measuring part 503 uses a temperature sensor 303 disposed in the power accumulator 300 to measure the temperature of the power accumulator 300 in a predetermined cycle. The measured temperature is converted from an analogue signal to a digital signal and output to the controller 520 as temperature data T, in a predetermined cycle.

The communication part 504 enables a communication between the controller 520 and the ECU 600. For example, the controller 520 transmits the measured values of the power accumulator 300, such as the voltage, temperature and current, the SOC calculated using these measured values, as well as fault information of the current sensor and the like, to the ECU 600. The ECU 600 can, for example, control the entire power source system 10 on the basis these transmitted data. The means for forming a communication between the ECU 600 and the communication part 504 may be a CAN, Ethenet, or radio transmission.

The controller 520 controls each part of the power supply control device 500. For example, the current data ID that is output from the current measuring part 502 is integrated over a predetermined period of time (a period of less than one day, for example) to calculate an integrated capacity Q. When the code C/D that is received along with the current data ID represents the charge direction (+) when the integration is performed, the current data ID is multiplied by a charging efficiency (a coefficient smaller than 1, e.g., 0.8). The controller 520 predicts and stores a remaining capacity SOC by using the integrated capacity Q.

Although the SOC is obtained using the integrated capacity Q as described above, the present embodiment is not limited to this aspect. For example, a plurality of data pairs of the voltage data VD and current data ID for the charge direction (+) and the discharge direction (-) are acquired and subjected to straight-line (straight line of VD-ID) approximation, and non-load voltage Vo is obtained from voltage segments of the approximated straight line. Then, an internal resistance of the power accumulator 300 and voltage drop caused by a polarization component are deducted from the non-load voltage Vo to calculate an electro motive force Vemf, and the SOC corresponding to the electro motive force Vemf can be obtained from an electro motive force-SOC characteristics table that is obtained beforehand through experiment. Furthermore, in an application where the temperature of the power accumulator 300 changes significantly, the temperature data T that is output from the temperature measuring part 503 can be used as an adjustment parameter of the electro motive force-SOC characteristics table.

Next, a processing of power supply control of the power supply control device 500 of the power source system 10 according to Embodiment 1 of the present invention is described.

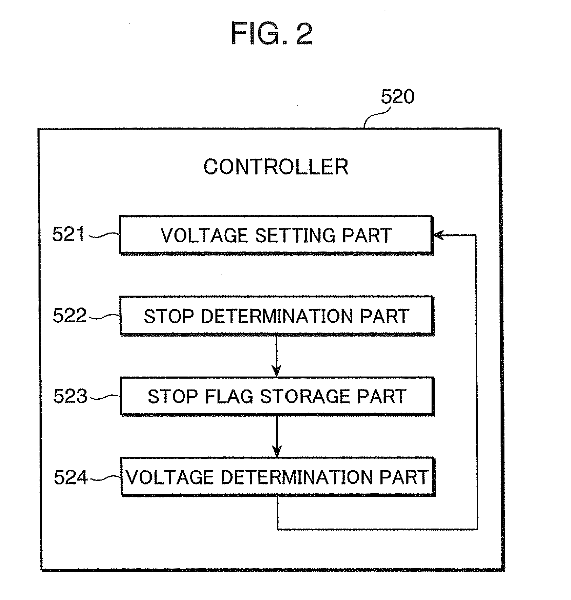

When supplying power from the power accumulator 300 to the load device 200 when the interruptible power source 100 is stopped, the power supply control device 500 according to the present embodiment resets the operable voltage of the power accumulator 300 and improves the power supply capacity of the power accumulator 300. Hereinafter, the processing of the power supply control is explained in detail. Note that a configuration of the controller 520 is explained first using Fig. 2, and thereafter a processing procedure for the power supply control is explained.

As described above, the controller 520 controls each part of the power supply control device 500 and has, for example, the following configuration in order to execute the processing of the power supply control. Fig. 2 shows the configuration of the controller 520 for realizing the processing of the power supply control of the power supply control device 500 according to Embodiment 1 of the present invention.

As shown in Fig. 2, the controller 520 has a voltage setting part 521 for setting the operable voltage of the power accumulator 300, a stop determination part 522 for determining the presence/absence of stoppage of the interruptible power source 100, a stop flag storage part 523 for setting up a stop flag when the stop determination part 522 determines that the stoppage of the interruptible power source 100 exists, and a voltage determination part 524 for determining whether the voltage of the power accumulator 300 is smaller than the operable voltage of the power accumulator 300 that is set previously, when the stop flag is set up.

The voltage setting part 521 sets the operable voltage of the power accumulator 300. When stop information of the interruptible power source 100 is input to the controller 520 via the communication part 504, the voltage setting part 521 resets the operable voltage of the power accumulator 300 according to need. Here, the operable voltage of the power accumulator 300 is the minimum voltage of the power accumulator 300 that is set for determining the output voltage of the power accumulator 300. The operable voltage of the power accumulator 300 is output to the charge/discharge control device 400 via the communication part 504 and the integrated control ECU 600. The charge/discharge control device 400 controls charge/discharge of the power accumulator 300 by using the operable voltage.

The stop determination part 522 monitors that the stop information of the interruptible power source 100 is input to the controller 520, and determines the presence/absence of the input. Note that the stop information of the interruptible power source 100 indicates stoppage of, for example, a commercial power source, main power source, and the like. In addition, the stop information may include disaster information indicating the possibility of stoppage of the commercial power source. The disaster information may be weather information for predicting a flood disaster, fire information, or earthquake information. Of course, the disaster information is not limited to the above examples and may indicate the stoppage of the interruptible power source or be disaster information with which the stoppage of the interruptible power source is predicted.

The stop flag storage part 523 sets up the stop flag when the stop determination part 522 determines that the input of the stop information of the interruptible power source 100 exists (Flag = 1).

When the stop flag is set up in the stop flag storage part 523, the voltage determination part 524 determines whether or not the voltage of the power accumulator 300 that is input from the voltage measuring part 501 into the controller 520 is smaller than the operable voltage set in the power accumulator 300.

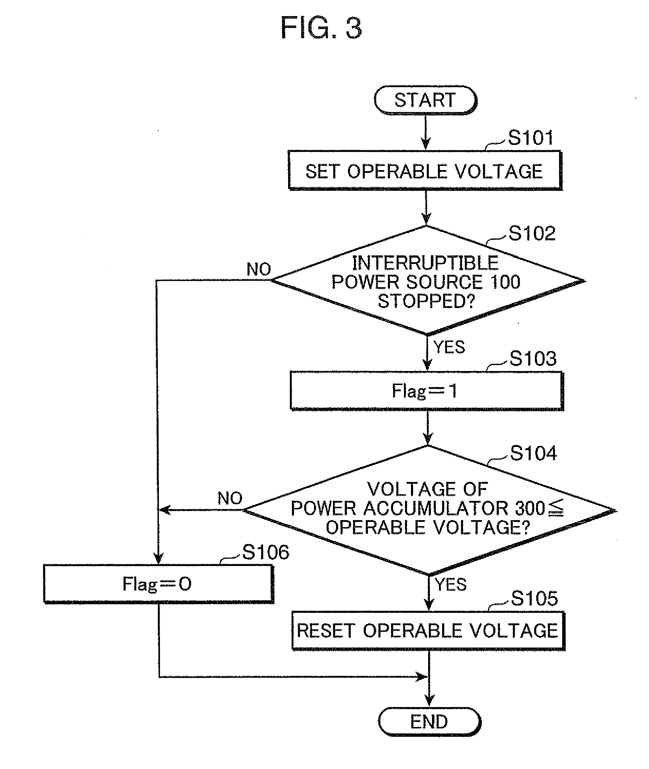

Next, the processing procedure for the power supply control is explained with reference to Fig. 3. Fig. 3 is a flowchart showing the processing procedure for the power supply control performed by the power supply control device 500 according to Embodiment 1 of the present invention.

As shown in Fig. 3, the voltage setting part 521 of the controller 520 sets the operable voltage of the power accumulator 300 during the normal operation in which the interruptible power source 100 can supply electric power (step S101). The set operable voltage is output to the integrated control ECU 600 via the communication part 504. The integrated control ECU 600 controls the charge/discharge control device 400 based on this operable voltage.

Next, the stop determination part 522 of the controller 520 monitors that the stop information of the interruptible power source 100 is input to the controller 520 and starts determining the presence/absence of the input (step S102). Here, the stop information of the interruptible power source 100 is acquired by the integrated control unit ECU 600 and output to the power supply control device 500. The integrated control ECU 600 has therein a stop information acquisition part 601 for acquiring the stop information of the interruptible power source 100, and acquires from the outside the stop information of the interruptible power source 100 by using the stop information acquisition part 601. The stop information of the interruptible power source 100 is, for example, information related to power outage of the interruptible power source 100 that is caused by a climate and disasters such as fire and earthquake, and such information is acquired by the stop information acquisition part 601. Furthermore, the stop information acquisition part 601 may directly detect the stoppage of the power supply of the interruptible power source 100.

Next, when the stop determination part 522 determines that the stoppage of the interruptible power source 100 exists (YES in step S102), the stop determination part 522 sets up the stop flag in the stop flag storage part 523 (step S103).

When the stop flag is set in the stop flag storage part 523, the voltage determination part 524 compares the voltage of the power accumulator 300 that is input from the voltage measuring part 501 with the operable voltage of the power accumulator 300 that is set in step S101 described above. Then, when the voltage of the power accumulator 300 is equal to or lower than the set operable voltage (YES in step S104), the voltage setting part 521 newly resets the operable voltage of the power accumulator 300 based on the voltage of the power accumulator 300 (step S105). Resetting this operable voltage can obtain the maximum power supply capacity of the power accumulator 300 at this point. Note that the operable voltage that is reset here is output from the controller 520 to the communication part 504. The power supply control device 500 uses the communication part 504 to output the reset operable voltage to the integrated control ECU 600. The integrated control ECU 600 controls the charge/discharge control device 400 based on the reset operable voltage.

When, on the other hand, the stoppage of the interruptible power source 100 does not exist (NO in step S102) and the voltage of the power accumulator 300 is greater than the operable voltage set in the power accumulator 300 (NO in step S104), the stop flag storage part 523 is initialized (step S106).

The processing of the power supply control according to Embodiment 1 of the present invention is executed in this manner. When resetting the operable voltage of the power accumulator 300 in step S105 described above, the operable voltage is set to 1.0V per electric power accumulating element 301 during the normal operation when the power accumulator 300 is, for example, a nickel hydride battery, and the operable voltage to be reset is set to 0.7V per electric power accumulating element 301. By resetting the operable voltage in this manner, the power supply capacity of the power accumulator 300 can be increased. By reducing the operable voltage, the minimum voltage (final voltage) can be reduced temporarily and the power supply capacity can be improved.

According to Embodiment 1 of the present invention as described above, the operable voltage of the power accumulator can be reset so that the maximum power supply capacity of the power accumulator can be obtained when the interruptible power source is stopped. Consequently, electric power required by the power accumulator can be continuously supplied to the load device.

Moreover, according to Embodiment 1 of the present invention, because the operable voltage of the power accumulator is reduced only when the interruptible power source is stopped, the number of times to reduce the operable voltage can be reduced and the number of times that the power accumulator is overdischarged due to the decrease in the operable voltage can also be reduced. Therefore, the battery characteristics and the reliability of the power accumulator can be prevented from being significantly degraded. In addition, the life degradation caused by the overdischarge can also be prevented so that the life duration of the power accumulator can be increased.

In addition, according to Embodiment 1 of the present invention, because the power supply capacity of the power accumulator can be increased when the interruptible power source is stopped, the capacity of the power accumulator does not need to be increased beforehand in light of the power supply performed when the interruptible power source is stopped. Therefore, the margin related to the capacity of the power accumulator can be reduced, and as a result, the size of the power accumulator can also be reduced.

In Embodiment 1 of the present invention, the operable voltage of the power accumulator 300 may be reset in step S105 described above, without executing the comparison of the voltage of the power accumulator 300 with the operable voltage of the power accumulator 300 in step S104. Even when the voltage of the power accumulator 300 is greater than the set operable voltage, resetting the operable voltage beforehand can prevent the power supply capacity of the power accumulator 300 from being significantly reduced as the voltage of the power accumulator 300 decreases.

Moreover, in Embodiment 1 of the present invention, when the stoppage of the interruptible power source 100 is canceled and the power supply performed by the interruptible power source 100 returns to the normal state again, the operable voltage of the power accumulator 300 may be reset again to a value that is set in step S101 described above.

In addition, in Embodiment 1 of the present invention, a program for realizing the processing of the power supply control of the power supply control device 500 may be executed on a microcomputer. Specifically, a power supply control program for realizing the voltage setting part 521, stop determination part 522 and voltage determination part 524 of the controller 520 shown in Fig. 2 may be installed on a microcomputer, and this power supply control program may be executed on the microcomputer.

A power supply control method of the power supply control device 500 can be realized by allowing the microcomputer to read and execute this power supply control program. This power supply control program may be installed on a storage part of the microcomputer and executed using an arithmetic part (Central Processing Unit: CPU) of the microcomputer. By allowing the arithmetic part of the microcomputer to execute the power supply control program, the voltage setting part 521, stop determination part 522 and voltage determination part 524 are realized, and the stop flag storage part 523 may be provided in the storage part of the microcomputer.

In Embodiment 1 of the present invention, the function of the controller 520 can be provided to the charge/discharge control device 400. In this case, for example, the power supply control program described above may be installed on a microcomputer configuring the charge/discharge control device 400 and executed on this microcomputer. Of course, the function of the charge/discharge control device 400 may be provided to the controller 520. Furthermore, the function of the controller 520 may be provided to the load device 200 or the integrated control ECU 600. For example, when the integrated control ECU 600 has the function of the controller 520, the power supply control device 500 has a limited function, such as a function for measuring the voltage, temperature and current of the power accumulator 300.

(Embodiment 2)

Embodiment 2 of the present invention is described next. In Embodiment 1 above, the power supply capacity of the power accumulator is increased by resetting the operable voltage of the power accumulator when the interruptible power source is stopped. In Embodiment 2 of the present invention, on the other hand, the operable voltage of the power accumulator is reset to increase the power supply amount of the power accumulator, when power that can be output by the power accumulator and the amount of the power is compared with the minimum power required for operating the load device or the amount of the power and, as a result, the minimum power required for operating the load device or the amount of the power exceeds the power that can be output by the power accumulator or the amount of the power, when the interruptible power source is stopped.

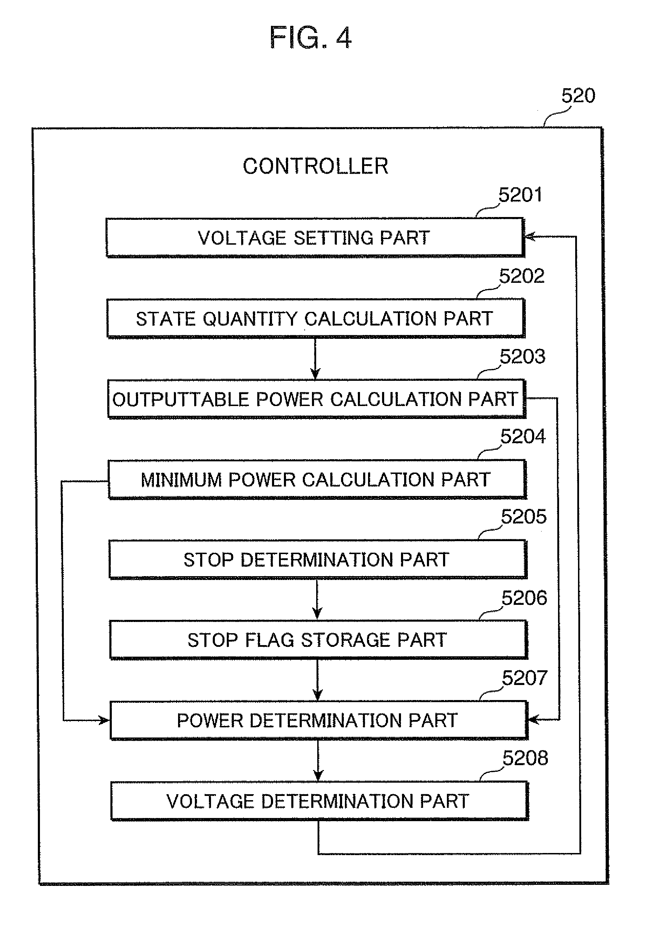

The processing of the power supply control performed by the power supply control device of the power source system according to Embodiment 2 of the present invention is described hereinafter. Note that the power source system according to the present embodiment can be basically realized by the same configuration as the configuration of the power source system shown in Fig. 1. However, the configuration of the controller 520 is made different in order to realize the processing of the power supply control performed by the power supply control device 500 according to the present embodiment. Fig. 4 shows a configuration of the controller 520 according to the present embodiment.

As shown in Fig. 4, the controller 520 according to the present embodiment has a voltage setting part 5201 for setting the operable voltage of the power accumulator 300, a state quantity calculation part 5202 for calculating a state quantity of the power accumulator 300, an outputtable power calculation part 5203 for calculating an outputtable power (power supply capacity) of the power accumulator 300, a minimum power calculation part 5204 for calculating the minimum amount of power required for operating the load device 200, a stop determination part 5205 for determining the presence/absence of stoppage of the interruptible power source 100, a stop flag storage part 5206 for setting up a stop flag when the stop determination part 5205 determines that the stoppage of the interruptible power source 100 exists, a power determination part 5207 for determining whether or not the outputtable power of the power accumulator 300 is smaller than the minimum power required for operating the load device 200, and a voltage determination part 5208 for determining whether the voltage of the power accumulator 300 is smaller than the operable voltage of the power accumulator 300 that is set previously.

The voltage setting part 5201 sets the operable voltage of the power accumulator 300. When stop information of the interruptible power source 100 is input to the controller 520 via the communication part 504, the voltage setting part 5201 resets the operable voltage of the power accumulator 300 according to need.

The state quantity calculation part 5202 calculates a state quantity of the power accumulator 300 that is required when the outputtable power calculation part 5203 calculates an outputtable power of the power accumulator 300. The state quantity is, for example, the SOC and open voltage, SOC is calculated by performing current integration using the current data ID obtained from the current measuring part 502. Also, the open voltage is calculated by subtracting the voltage drop obtained from the internal resistance and the polarization voltage, from each inter-terminal voltage of the power accumulator 300.

The outputtable power calculation part 5203 uses the state quantity calculated by the state quantity calculation part 5202 to calculate the outputtable power of the power accumulator 300. For example, the outputtable power may be calculated from Equation (1) described above by using the open voltage. When using the SOC, the outputtable power may be calculated as follows. Specifically, first, an SOC obtained when the output voltage of the power accumulator 300 becomes the set operable voltage is obtained from the electro motive force-SOC characteristics table. Then, this obtained SOC is subtracted from the current SOC calculated by the state quantity calculation part 5202. The result of the subtraction is multiplied by a full-charge capacity of the power accumulator 300, whereby the power supply capacity at which the output voltage of the power accumulator 300 reaches the set operable voltage can be obtained. Here, the outputtable power of the power accumulator 300 is calculated, but the amount of power may be calculated instead.

The minimum power calculation part 5204 calculates the present minimum power required, from the powers required for operating various equipment stored in the load device 200. The minimum operation is an operation for, when the power source system is applied to, for example, and elevator, driving a cage of the elevator system to the nearest floor or any arbitrary floor to safely rescue the passages from the cage. As with the outputtable power calculation part z, the amount of power may be calculated.

The stop determination part 5205 monitors that the stop information of the interruptible power source 100 is input into the controller 520 to determine the presence/absence of the input.

The stop flag storage part 5206 sets up the stop flag when the stop determination part 5205 determines that the input of the stop information of the interruptible power source 100 exists (Flag = 1).

When the stop flag is set up in the stop flag storage part 5206, the power determination part 5207 determines whether or not the outputtable power of the power accumulator 300 that is input from the outputtable power calculation part 5203 is smaller than the minimum power required for operating the load device 200 that is input from the minimum power calculation part 5204. Note that when the amount of power is input from the outputtable power calculation part 5203 and the minimum power calculation part 5204, the determination is made based on these amounts of power.

The voltage determination part 5208 determines whether or not the voltage of the power accumulator 300 that is input from the voltage measuring part 501 into the controller 520 is smaller than the operable voltage that is set in the power accumulator 300.

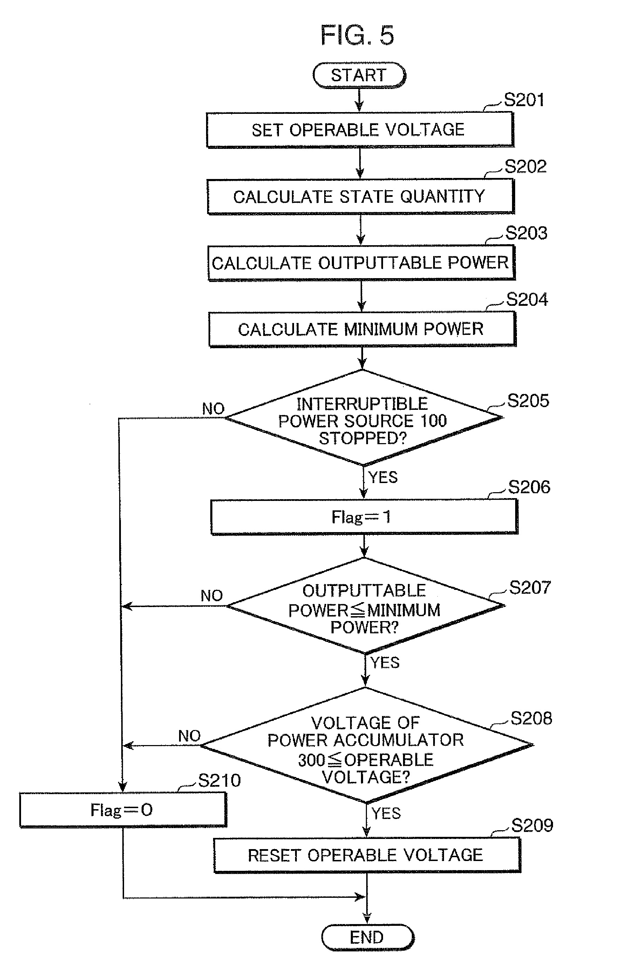

Next, the processing procedure for this power supply control is explained using Fig. 5. Fig. 5 is a flowchart showing the processing procedure for the power supply control performed by the power supply control device 500 according to Embodiment 2 of the present invention.

As shown in Fig. 5,the voltage setting part 5201 of the controller 520 sets the operable voltage of the power accumulator 300 during the normal operation where the interruptible power source 100 can supply power (step S201). The set operable voltage is output to the integrated control ECU 600 via the communication part 504. The integrated control ECU 600 controls the charge/discharge control device 400 based on this operable voltage.

Next, the state quantity calculation part 5202 calculate the state quantity of the power accumulator 300 by using the voltage data VD, current data ID and temperature data T that are input from the voltage measuring part 501, the current measuring part 502, and the temperature measuring part 503 respectively (step S202).

Next, the outputtable power calculation part 5203 uses the state quantity of the power accumulator 300 that is input from the state quantity calculation part 5202, to calculate the current outputtable power of the power accumulator 300 (step S203), and the minimum power calculation part 5204 calculates the current minimum power required for the operation, from the powers required for operating various equipment stored in the load device 200 (step S204).

Next, the stop determination part 5205 monitors that the stop information of the interruptible power source 100 is input into the controller 520 and starts determining the presence/absence of the input (step S205).

When the stop determination part 5205 determines that the stoppage of the interruptible power source 100 exists (YES in step S205), the stop determination part 5205 sets up the stop flag in the stop flag storage part 5206 (step S206).

When the stop flag is set up in the stop flag storage part 5206, the power determination part 5207 compares the outputtable power of the power accumulator 300 that is input from the outputtable power calculation part 5203 with the minimum power required for operating the load device 200 that is input from the minimum power calculation part 5204 (step S207). When the outputtable power of the power accumulator 300 is equal to or lower than the minimum power required for operating the load device 200 (YES in step S207), the voltage determination part 5208 compares the voltage of the power accumulator 300 that is input from the voltage measuring part 501 with the operable voltage of the power accumulator 300 that is set in step S201 described above. When the voltage of the power accumulator 300 is equal to or lower than the operable voltage (YES in step S208), the voltage setting part 5201 newly resets the operable voltage of the power accumulator 300 based on the voltage of the power accumulator 300, as in, for example, step S105 shown in Fig. 3 (step S209). The reset operable voltage is output from the controller 520 to the communication part 504. The power supply control device 500 uses the communication part 504 to output this reset operable voltage to the integrated control ECU 600. The integrated control ECU 600 controls the charge/discharge control device 400 based on this reset operable voltage.

When, on the other hand, the stoppage of the interruptible power source 100 does not exist (NO in step S205) when the outputtable power of the power accumulator 300 is greater than the minimum voltage required for operating the load device 200 (NO in step S207), and when the voltage of the power accumulator 300 is greater than the operable voltage set in the power accumulator 300 (NO in step S208), the stop flag storage part 5206 is initialized (step S210).

In this manner, the processing of the power supply control according to Embodiment 2 of the present invention is executed.

As described above, according to Embodiment 2 of the present invention, the operable voltage of the power accumulator can be reset so that the maximum power supply capacity of the power accumulator can be obtained when the interruptible power source is stopped. Therefore, the power required by the power accumulator can be continuously supplied to the load device when the interruptible power source is stopped.

Moreover, according to Embodiment 2 of the present invention, because the operable voltage of the power accumulator is reduced only when the interruptible power source is stopped, the operable voltage does not need to be reduced frequently and the number of times that the power accumulator is overdischarged due to the decrease in the operable voltage can be prevented from increasing.

According to Embodiment 2 of the present invention, only when the outputtable power of the power accumulator is equal to or lower than the minimum power required for operating the load device when the interruptible power source is stopped as a result of calculating the outputtable power of the power accumulator and the minimum power required for operating the load device, the operable voltage of the power accumulator is reduced, so that the number of times that the power accumulator is overdischarged due to the decrease of the operable voltage can be reduced. Therefore, not only is it possible to prevent the battery characteristics and reliability of the power accumulator from being degraded more than when the controller 520 shown in Fig. 4 is used, but also the life degradation caused by the overdischarge, and the life duration of the power accumulator can be increased.

In addition, according to Embodiment 2 of the present invention, only when the outputtable power of the power accumulator is not enough to supply the minimum power required for operating the load device when the interruptible power source is stopped, the power supply capacity of the power accumulator can be increased, so that the capacity of the power accumulator does not have to be increased beforehand. As a result, the margin related to the capacity of the power accumulator can be reduced, and as a result, the size of the power accumulator can also be reduced.

In Embodiment 2 of the present invention, an operational SOC range of the power accumulator 300 may be reset in step S201 described above. Specifically, the lower limit of the range of use of the SOC may be set lower than the normal range of use of normal SOC when the interruptible power source 100 is stopped.

In Embodiment 2 of the present invention, the operable voltage of the power accumulator 300 may be reset in step S209 described above, without executing the comparison of the voltage of the power accumulator 300 with the operable voltage of the power accumulator 300 in step S208 described above. Even when the voltage of the power accumulator 300 is greater than the set operable voltage, resetting of the operable voltage beforehand can prevent the power supply capacity of the power accumulator 300 from being reduced significantly as the voltage of the power accumulator 300 decreases.

In Embodiment 2 of the present invention, when the stoppage of the interruptible power source 100 is canceled and the power supply from the interruptible power source 100 is performed normally again, the operable voltage of the power accumulator 300 may be reset again.

Moreover, in Embodiment 2 of the present invention as well, the program for realizing the processing of the power supply control performed by the power supply control device 500 may be executed on a microcomputer. Specifically, the power supply control program for realizing the voltage setting part 5201, state quantity calculation part 5202, outputtable power calculation part 5203, minimum power calculation part 5204, stop determination part 5205, power determination part 5207, and voltage determination part 5208 that are provided in the controller 520 shown in Fig. 4 may be installed on a microcomputer, and this power supply control program may be executed on the microcomputer.

The power supply control method of the power supply control device 500 is realized by allowing the microcomputer to read and execute this power supply control program. This power supply control program may be installed on a storage part of the microcomputer and executed using an arithmetic part (Central Processing Unit: CPU) of the microcomputer. By allowing the arithmetic part of the microcomputer to execute the power supply control program, the voltage setting part 5201, state quantity calculation part 5202, outputtable power calculation part 5203, minimum power calculation part 5204, stop determination part 5205, power determination part 5207, and voltage determination part 5208 are realized, and the stop flag storage part 5206 may be provided in the storage part of the microcomputer.

Also, in Embodiment 2 of the present invention, the function of the controller 520 can be provided to the charge/discharge control device 400. In this case, for example, the power supply control program described above may be installed on the microcomputer configuring the charge/discharge control device 400, to execute this program. Of course, the controller 520 may be provided with the function of the charge/discharge control device 400. Furthermore, the function of the controller 520 may be provided to the load device 200 or the integrated control ECU 600. For example, when the function of the controller 520 is provided to the integrated control ECU 600, the power supply control device 500 has a limited function, such as a function for measuring the voltage, temperature and current of the power accumulator 300.

According to the present invention, the power supply capacity of the power accumulator can be increased by resetting the operable voltage of the power accumulator lower than the normal [operable voltage] when the interruptible power source is stopped. Consequently, the convenience of the power source system during the stoppage of the interruptible power source can be enhanced.

According to the present invention, because the operable voltage of the power accumulator is reduced when the interruptible power source is stopped, the number of times that the power accumulator is overdischarged is not increased. As a result, the life degradation caused by the overdischarge can be prevented, and the life duration of the power accumulator can be increased.

The following is a summary of the present invention based on the embodiments described above. Specifically, the power source system according to an aspect of the present invention has a power unit for supplying power to a load device, a power accumulator for supplying the power to the load device in place of the power unit when the power unit is stopped, and a controller for controlling the power supply from the power accumulator to the load device, wherein the controller sets an operable voltage, which is determined as an output voltage for ending discharge of the power accumulator, at a first voltage when the power unit is operated, and sets the operable voltage at a second voltage lower than the first voltage when the power unit is stopped, thereby increasing the power supplied to the load device by the power accumulator.

According to the power source system described above, the power supply capacity of the power accumulator can be improved by reducing the operable voltage of the power accumulator when the power unit is stopped, the operable voltage being set during the normal operation of the power unit. Furthermore, the operable voltage is not reduced frequently after the power unit is stopped, and the number of times that the power accumulator is overdischarged due to the decrease in the operable voltage can be prevented from increasing. Therefore, the life duration of the power accumulator can be increased. In addition, the size of the power accumulator can be reduced easily because it is not necessary to increase the capacity of the power accumulator beforehand in light of an increase in power supply when the power unit is stopped.

It is preferred that the controller have a stop determination part for determining the presence/absence of stoppage of the power unit, and a voltage setting part for setting the operable voltage, wherein, when the stop determination part determines that the stoppage of the power unit exists, the voltage setting part changes the operable voltage from the first voltage to the second voltage.

According to this configuration, the stop determination part can determine the occurrence of stoppage of the power unit and increase, as soon as power outage occurs, the power that can be supplied to the load device.

It is preferred that the controller further have an outputtable power calculation part for calculating an outputtable power that can be supplied to the load device by the power accumulator, while keeping the output voltage of the power accumulator at the operable voltage or higher, a minimum power calculation part for calculating the minimum power required by the load device when the power unit is stopped, and a power determination part for determining whether or not the outputtable power calculated by the outputtable power calculation part is equal to or lower than the minimum power calculated by the minimum power calculation part, wherein, when it is determined that the outputtable power calculated by the outputtable power calculation part is equal to or lower than the minimum power calculated by the minimum power calculation part, the voltage setting part changes the operable voltage from the first voltage to the second voltage.

According to this configuration, the operable voltage of the power accumulator can be reduced only when the outputtable power of the power accumulator is equal to or lower than the minimum power required for operating the load device when the power unit is stopped, as a result of calculating the outputtable power of the power accumulator and the minimum power required for operating the load device. Consequently, the number of times that the power accumulator is overdischarged due to the decrease of the operable voltage can be further reduced, Therefore, the life duration of the power accumulator can be improved.

It is preferred that the controller further have a voltage determination part for acquiring the output voltage of the power accumulator and determining whether or not the acquired output voltage of the power accumulator is equal to or lower than the first voltage, wherein, when the power unit is stopped and it is determined that the output voltage of the power accumulator acquired by the voltage determination part is equal to or lower than the first voltage, the voltage setting part changes the operable voltage from the first voltage to the second voltage.

According to this configuration, the operable voltage can be reduced only when the output voltage of the power accumulator is smaller than the previously set operable voltage. Therefore, the number of times that the power accumulator is overdischarged due to the decrease in the operable voltage can be reduced, and the life duration of the power accumulator can be increased.

It is preferred that the voltage setting part change the operable voltage from the second voltage to the first voltage when the stoppage of the power unit is canceled and then the power unit is operated again.

According to this configuration, the operable voltage obtained during the normal operation of the power unit can be reset and the power supply capacity of the power accumulator can be returned to a normal state, when the stoppage of the power unit is canceled and the power source is supplied form the power unit again. As a result, the number of times that the power accumulator is overdischarged due to the decrease in the operable voltage can be reduced, and the life duration of the power accumulator can be increased.

The power supply control method of the power source system according to another aspect of the present invention is a power supply control method of the power source system having a power accumulator for supplying power to a load device in place of a power unit when the power unit supplying power to the load device is stopped, the power supply control method having the steps of setting operable voltage, which is determined as an output voltage for ending discharge of the power accumulator, at a first voltage when the power unit is operated, and setting the operable voltage at a second voltage lower than the first voltage when the power unit is stopped, thereby increasing the power supplied to the load device by the power accumulator.

According to the power supply control method described above, the power supply capacity of the power accumulator can be improved by reducing the operable voltage of the power accumulator set during the normal operation of the power unit, when the power unit is stopped. In addition, because the operable voltage of the power accumulator is reduced after the power unit is stopped, the number of times that the power accumulator is overdischarged due to the decrease in the operable voltage can be prevented from increasing. Therefore, the life duration of the power accumulator can be enhanced. Furthermore, the size of the power accumulator can be reduced because it is not necessary to increase the capacity of the power accumulator beforehand in light of an increase in power supply when the power unit is stopped.

The power supply control program of the power supply system according to yet another aspect of the present invention is a power supply control program of the power source system having a power accumulator for supplying power to a load device in place of a power unit when the power unit supplying power to the load device is stopped, the power supply control program causing a computer to function as a stop determination part for determining the presence/absence of stoppage of the power unit, and a voltage setting part for setting the operable voltage, which is determined as an output voltage for ending discharge of the power accumulator, at a first voltage when the power unit is operated, and setting the operable voltage at a second voltage lower than the first voltage when the power unit is stopped, thereby increasing the power supplied to the load device by the power accumulator.

According to the power supply control program of the power system, the power supply capacity of the power accumulator can be improved by reducing the operable voltage of the power accumulator when the power unit is stopped, the operable voltage being set during the normal operation of the power unit. In addition, because the operable voltage of the power accumulator is reduced after the power unit is stopped, the number of times that the power accumulator is overdischarged due to the decrease in the operable voltage can be prevented from increasing. As a result, the life duration of the power unit can be enhanced. Furthermore, the size of the power accumulator can be reduced because it is not necessary to increase the capacity of the power accumulator beforehand in light of an increase in power supply when the power unit is stopped.

A computer readable recording medium according to yet another aspect of the present invention, which has a power supply control program of a power source system recorded thereon, records the power supply control program of the power source system that causes a computer to function as a stop determination part for determining the presence/absence of stoppage of the power unit, and a voltage setting part for setting the operable voltage, which is determined as an output voltage for ending discharge of the power accumulator, at a first voltage when the power unit is operated, and setting the operable voltage at a second voltage lower than the first voltage when the power unit is stopped, thereby increasing the power supplied to the load device by the power accumulator.

According to the power supply control program of the power system that is recorded in the recording medium described above, the power supply capacity of the power accumulator can be improved by reducing the operable voltage of the power accumulator when the power unit is stopped, the operable voltage being set during the normal operation of the power unit. In addition, because the operable voltage of the power accumulator is reduced after the power unit is stopped, the number of times that the power accumulator is overdischarged due to the decrease in the operable voltage can be prevented from increasing. As a result, the life duration of the power unit can be enhanced. Furthermore, the size of the power accumulator can be reduced because it is not necessary to increase the capacity of the power accumulator beforehand in light of an increase in power supply when the power unit is stopped. Industrial Applicability

The power source system, the power supply control method of the power source system, the power supply control program of the power source system, and the computer readable recording medium having the power supply control program of the power source system recorded thereon according to the present invention are effective in a power source and equipment having a backup power source function and therefore has industrial applicability.

**Claims**

**1.** A power source system, comprising:

a power unit for supplying power to a load device;
a power accumulator for supplying the power to the load device in place of the power unit when the power unit is stopped; and

a controller for controlling the power supply from the power accumulator to the load device,
wherein the controller sets an operable voltage, which is determined as an output voltage for ending discharge of the power accumulator, at a first voltage when the power unit is operated, and sets the operable voltage at a second voltage lower than the first voltage when the power unit is stopped, thereby increasing the power supplied to the load device by the power accumulator.

2. The power source system according to claim 1, wherein the controller has:

a stop determination part for determining the presence/absence of stoppage of the power unit; and
a voltage setting part for setting the operable voltage, wherein, when the stop determination part determines that the stoppage of the power unit exists, the voltage setting part changes the operable voltage from the first voltage to the second voltage.

3. The power source system according to claim 2, wherein the controller further has:

an outputtable power calculation part for calculating an outputtable power that can be supplied to the load device by the power accumulator, while keeping the output voltage of the power accumulator at the operable voltage or higher;
a minimum power calculation part for calculating the minimum power required by the load device when the power unit is stopped; and
a power determination part for determining whether or not the outputtable power calculated by the outputtable power calculation part is equal to or lower than the minimum power calculated by the minimum power calculation part,
and wherein, when it is determined that the outputtable power calculated by the outputtable power calculation part is equal to or lower than the minimum power calculated by the minimum power calculation part, the voltage setting part changes the operable voltage from the first voltage to the second voltage.

4. The power source system according to any one of claims 1 to 3, wherein the controller further has a voltage determination part for acquiring the output voltage of the power accumulator and determining whether or not the acquired output voltage of the power accumulator is equal to or lower than the first voltage, and wherein, when the power unit is stopped and it is determined that the output voltage of the power accumulator acquired by the voltage determination part is equal to or lower than the first voltage, the voltage setting part changes the operable voltage from the first voltage to the second voltage.

5. The power source system according to any one of claims 1 to 4, wherein the voltage setting part changes the operable voltage from the second voltage to the first voltage when the stoppage of the power unit is canceled and then the power unit is operated again.

6. A power supply control method of a power source system having a power accumulator for supplying power to a load device in place of a power unit when the power unit supplying power to the load device is stopped, the power supply control method comprising the steps of:

setting an operable voltage, which is determined as an output voltage for ending discharge of the power accumulator, at a first voltage when the power unit is operated; and
setting the operable voltage at a second voltage lower than the first voltage when the power unit is stopped, thereby increasing the power supplied to the load device by the power accumulator.

7. A power supply control program of a power source system having a power accumulator for supplying power to a load device in place of a power unit when the power unit supplying power to the load device is stopped, the power supply control program causing a computer to function as:

a stop determination part for determining the presence/absence of stoppage of the power unit; and
a voltage setting part for setting an operable voltage, which is determined as an output voltage for ending discharge of the power accumulator, at a first voltage when the power unit is operated, and setting the operable voltage at a second voltage lower than the first voltage when the power unit is stopped, thereby increasing the power supplied to the load device by the power accumulator.

8. A computer readable recording medium, which has recorded thereon a power supply control program of a power source system having a power accumulator for supplying power to a load device in place of a power unit when the power unit supplying power to the load device is stopped,
wherein the power supply control program causes a computer to function as:

a stop determination part for determining the presence/absence of stoppage of the power unit; and
a voltage setting part for setting an operable voltage, which is determined as an output voltage for ending discharge of the power accumulator, at a first voltage when the power unit is operated, and setting the operable voltage at a second voltage lower than the first voltage when the power unit is stopped, thereby increasing the power supplied to the load device by the power accumulator.

# FIG. 1

EP 2 096 734 A1

# FIG. 2

520

CONTROLLER

521 — VOLTAGE SETTING PART

522 — STOP DETERMINATION PART

523 — STOP FLAG STORAGE PART

524 — VOLTAGE DETERMINATION PART

# FIG. 3

```
                        ┌─────────────┐
                        │    START    │
                        └─────────────┘
                               │
                               ▼                    ┌─S101
                    ┌──────────────────────────┐
                    │   SET OPERABLE VOLTAGE    │
                    └──────────────────────────┘
                               │
                               ▼                    ┌─S102
                          ╱─────────╲
          NO         ╱  INTERRUPTIBLE  ╲
        ◄───────────   POWER SOURCE 100   
                       ╲    STOPPED?   ╱
                          ╲─────────╱
                               │ YES
                               ▼                    ┌─S103
                    ┌──────────────────────────┐
                    │          Flag=1           │
                    └──────────────────────────┘
                               │
                               ▼                    ┌─S104
                          ╱─────────╲
          NO         ╱   VOLTAGE OF    ╲
        ◄───────────  POWER ACCUMULATOR 300≦  
                      ╲ OPERABLE VOLTAGE? ╱
                          ╲─────────╱
  ┌─S106                      │ YES            ┌─S105
┌──────────────┐             ▼
│    Flag=0    │   ┌──────────────────────────┐
└──────────────┘   │   RESET OPERABLE VOLTAGE  │
        │          └──────────────────────────┘
        │                      │
        └──────────►───────────┤
                               ▼
                        ┌─────────────┐
                        │     END     │
                        └─────────────┘
```

# FIG. 4

520

CONTROLLER

5201

VOLTAGE SETTING PART

5202

STATE QUANTITY CALCULATION PART

5203

OUTPUTTABLE POWER CALCULATION PART

5204

MINIMUM POWER CALCULATION PART

5205

STOP DETERMINATION PART

5206

STOP FLAG STORAGE PART

5207

POWER DETERMINATION PART

5208

VOLTAGE DETERMINATION PART

# FIG. 5

START

SET OPERABLE VOLTAGE — S201

CALCULATE STATE QUANTITY — S202

CALCULATE OUTPUTTABLE POWER — S203

CALCULATE MINIMUM POWER — S204

INTERRUPTIBLE POWER SOURCE 100 STOPPED? — S205

NO →

YES ↓

Flag = 1 — S206

OUTPUTTABLE POWER ≦ MINIMUM POWER? — S207

NO →

YES ↓

VOLTAGE OF POWER ACCUMULATOR 300 ≦ OPERABLE VOLTAGE? — S208

NO →

YES ↓

Flag = 0 — S210

RESET OPERABLE VOLTAGE — S209

END

## INTERNATIONAL SEARCH REPORT

| | International application No. |
|---|---|
| | PCT/JP2007/073864 |

A.  CLASSIFICATION OF SUBJECT MATTER
*H02J7/34*(2006.01)i, *B66B1/34*(2006.01)i, *B66B5/02*(2006.01)i, *H01M10/44*
(2006.01)i, *H02J9/00*(2006.01)i, *H02J9/06*(2006.01)i

According to International Patent Classification (IPC) or to both national classification and IPC

B.  FIELDS SEARCHED

Minimum documentation searched (classification system followed by classification symbols)
H02J7/34, B66B1/34, B66B5/02, H01M10/44, H02J9/00, H02J9/06

Documentation searched other than minimum documentation to the extent that such documents are included in the fields searched
Jitsuyo Shinan Koho            1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2004-357377 A   (Osaka Gas Co., Ltd.),<br>16 December, 2004 (16.12.04),<br>Par. Nos. [0005] to [0010], [0015], [0016],<br>[0027]; Fig. 2<br>(Family: none) | 1,2,5-8<br>3,4 |
| Y | JP 11-199152 A   (Toshiba Corp.),<br>27 July, 1999 (27.07.99),<br>Par. Nos. [0021] to [0036]<br>(Family: none) | 3,4 |
| A | JP 2001-224142 A   (Nissin Electric Co., Ltd.),<br>17 August, 2001 (17.08.01),<br>Par. Nos. [0043] to [0049]<br>(Family: none) | 1-8 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>07 January, 2008 (07.01.08) | Date of mailing of the international search report<br>15 January, 2008 (15.01.08) |
|---|---|
| Name and mailing address of the ISA/<br>Japanese Patent Office | Authorized officer |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11199152 B